# EUROPEAN PATENT APPLICATION

(11) **EP 4 436 131 A1**
(43) Date of publication of application: **25.09.2024**
(21) Application number: 23163346.2
(22) Date of filing: 22.03.2023
(51) Int. Cl.: H04L 47/22, H04L 47/28, H04L 47/10, H04L 47/30, H04L 47/625, H04W 28/02, H04W 28/06

(54) **IMPROVED WI-FI AIR INTERFACE UTILISATION**

(71) Applicant: British Telecommunications public limited company, London E1 8EE (GB)
(72) Inventor: EVENDEN, Richard, London, E 1 8EE (GB); SCAHILL, Francis, London, E1 8EE (GB)
(74) Representative: British Telecommunications public limited company Intellectual Property Department

(57) **Abstract**

Described are methods for operating a wireless access point, where a sequence of data packets are received with an interarrival time between the data packets greater than a frame aggregation threshold. The frame aggregation threshold is the time interval within which data packets received by the Wi-Fi driver in the access point will be aggregated into a single data packet before transmission over Wi-Fi. Successive received data packets are stored in a buffer, and forwarded to the Wi-Fi driver with a total time interval between each forwarded data packet less than the frame aggregation threshold. As a result, the forwarded data packets are transmitted by the Wi-Fi driver in an aggregated frame. Forwarding of the data packets can occur once the buffer has been filled to a certain limit (of data packets), and where the limit can be adjusted according to a measure of the Wi-Fi air utilisation.

## Description

### Field of the Invention

This invention relates to the field of operating a wireless local area network access point, in particular in managing of received data packets to optimise subsequent wireless transmissions.

### Background to the Invention

Wireless Access Point (AP) is a hardware device that allows other devices to connect to a wired network and each other over Wi-Fi. Wireless APs usually operate in accordance with the IEEE 802.11 standard. The wired network is typically a broadband network providing access to the Internet to devices connected to the wireless AP. Note, in the following description, the term access point (AP) and wireless AP will be used interchangeably.

In the Applicant's IP TV service, BT Sport, a set-top box (STB) is connected over Wi-Fi to an AP. IP multicast is used to deliver video content from IPTV servers to the AP in a stream of periodic data packets, before being converted to unicast packets and transmitted over Wi-Fi to the STB to reduce the risk of dropped packets. As the AP can support multiple content channels (and over standard and high definition), it is important that the Wi-Fi air utilisation is optimised efficiently.

However, each multicast packet in the stream received by the AP can result in a single unicast packet being forwarded to the STB over Wi-Fi, which results in an inefficient use of the air interface. Indeed, in such a situation, the data packet being sent over Wi-Fi by the Wi-Fi driver will have the overhead of other data packets associated with it. These overheads are typically a request to send packet (RTS) sent by the AP to the STB, a clear to send (CTS) packet sent by the STB to the AP, before the data packet itself can be sent by the AP to the STB, and then finally an acknowledgement of receipt of the data packet (BlkACK) sent by the STB to the AP. The RTS/CTS is effectively a handshaking mechanism that overcomes the hidden node problem.

The table below illustrates the described sequence.

**Table 1**

| ***Pkt* #** | ***Type*** | ***Direction*** |
|---|---|---|
| 1. | RTS | AP → STB |
| 2. | CTS | AP ← STB |
| 3. | Data (1) | AP → STB |
| 4. | BlkAck | AP ← STB |

This means only a single data packet might be sent for each RTS/CTS/BIckAck packet, and thus the overhead is high. For a single BT Sport HD channel suffering from these conditions, the 5GHz Wi-Fi utilisation is -20%, where the actual data transmission within that sequence could account for a fraction of that utilization.

Under IEEE 802.11 ac, a feature called Wi-Fi Frame Aggregation exists that aims to improve air utilisation efficiency by grouping multiple received data packet into a single large data packet before transmission over Wi-Fi. One such frame aggregation mechanism is the aggregated MAC protocol data unit (A-MPDU) aggregation.

However, A-MPDU does not always aggregate multiple data frames when it is most efficient to do so. Indeed, under the IPTV service example described above, A-MPDU is not triggered and the transmitted packets over Wi-Fi follow the sequence of Table 1, when air utilisation might be improved if A-MPDU could be triggered.

Whilst the above problem has been described in relation to an IPTV scenario with a STB connected to the AP, the same problem might be experienced in other scenarios with other types of devices connected to the AP. Furthermore, the same inefficiencies might also be experienced when periodic unicast data (and not just multicast) is being received at the AP before transmission to a connected device over Wi-Fi.

### Summary of the Invention

It is the aim of examples of the present invention to address one or more of the above described problems.

According to one example of the invention, there is provided a method of operating a wireless access point, the wireless access point comprising a network interface, a buffer and a wireless interface, the method comprising the steps of:
receiving a stream of data packets on the network interface, wherein an interarrival time between the data packets is greater than a frame aggregation threshold;
storing each of the data packets in the buffer; and
forwarding the buffered data packets to the wireless interface, wherein the total time interval over which the data packet have been forwarded is less than the frame aggregation threshold such that the forwarded data packets are transmitted over a wireless local area network by the wireless interface in an aggregated frame.

The method may further comprise obtaining a measurement indicating an air utilisation of the wireless local area network; setting a buffer limit based on the air utilisation; and forwarding the buffered data packets when a count of the buffered data packets reaches the buffer limit.

If the air utilisation of the wireless local area network is greater than a first threshold, the buffer limit may be increased; and if the air utilisation of the wireless local area network is less than a second threshold, the buffer limit may be decreased.

The forwarded data packets may be transmitted over the wireless local area network as a unicast stream. The received stream of data packets may be a multicast stream. The data packets may correspond to video data.

The forwarded data packets may be transmitted to a wireless device connected to the access point over the wireless local area network.

According to one example of the invention, there is provided a wireless access point comprising a network interface, a buffer, a controller and a wireless interface, wherein:
the network interface is adapted to receive data packets, wherein an interarrival time between the data packets is greater than a frame aggregation threshold;
the buffer is adapted to store each of the data packets; and
the controller is adapted to forward the buffered data packets to the wireless interface, wherein the total time interval over which the data packet have been forwarded is less than the frame aggregation threshold such that the forwarded data packets are transmitted over a wireless local area network by the wireless interface in an aggregated frame.

### Brief Description of the Drawings

For a better understanding of the present invention reference will now be made by way of example only to the accompanying drawings, in which:
Figure 1 system diagram shows an example network diagram;
Figure 2 is a simplified block diagram of an access point in an example of the invention;
Figure 3 is a flow chart summarising the operation of the access point in an example of the invention;
Figure 4 is a graph illustrating Wi-Fi utilisation and latency as a function of buffer size.

### Description of Preferred Embodiments

The present invention is described herein with reference to particular examples. The invention is not, however, limited to such examples.

Examples of the present invention provide a method of operating a wireless access point, where a sequence of data packets are received with an interarrival time between the data packets greater than a frame aggregation threshold. The frame aggregation threshold is the time interval within which data packets received by the Wi-Fi driver in the access point will be aggregated into a single data packet before transmission over Wi-Fi. Successive received data packets are stored in a buffer, and forwarded to the Wi-Fi driver with a total time interval between each forwarded data packet less than the frame aggregation threshold. As a result, the forwarded data packets are transmitted by the Wi-Fi driver in an aggregated frame. Forwarding of the data packets can occur once the buffer has been filled to a certain limit (of data packets), and where the limit can be adjusted according to a measure of the Wi-Fi air utilisation.

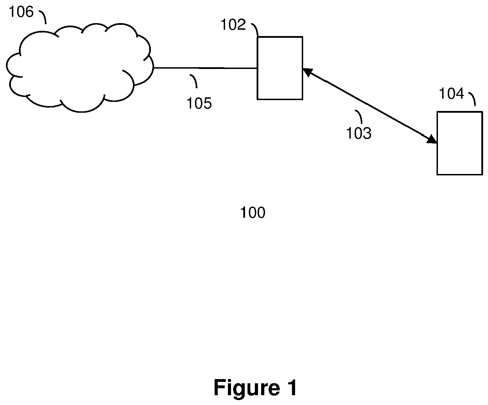

Figure 1 shows a system 100 comprising a wireless access point (AP) 102 and a wireless device 104. In the following text, the term access point or AP is used interchangeably with and refers to the wireless AP 102. An example of the wireless device 104 is a set top box (STB), though the invention is equally applicable to any other wireless device such as a smart phone or tablet. The AP 102 and the wireless device 104 can communicate with each other wireless over a wireless local area network 103. The AP 102 also has access to a wide area network 106 over a DSL connection 105. The wide area network 106 can include access to the Internet as well as other networks and services. It should be noted that the system 100 shows a simplified arrangement, and other elements may be present in practice, such as additional wireless devices.

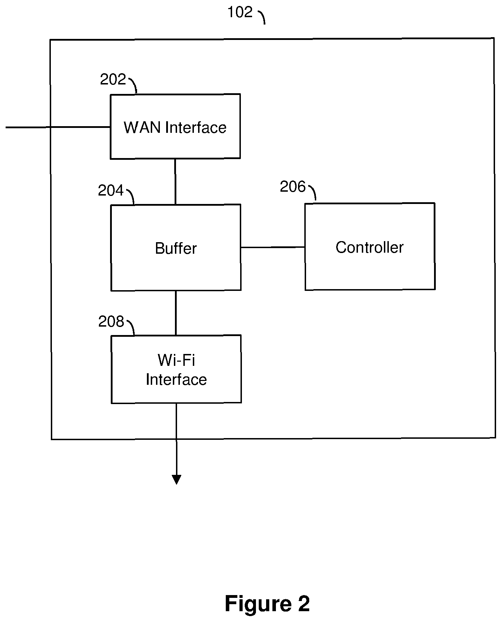

Figure 2 shows the AP 102 in more detail. The AP 102 comprises a WAN interface 202, a buffer 204, a controller 206 and a Wi-Fi interface 208. The WAN interface 202 provides connectivity the WAN 106, and can transmit/receive data to/from the WAN 106. The buffer 204 can be used to store data packets received over the WAN Interface 202. The controller 206 controls the operation of the buffer and how received data packets are handled. The Wi-Fi interface 208 is a standard Wi-Fi interface operated by a Wi-Fi driver, and handles communications over Wi-Fi with the wireless device 104.

In an example scenario, the AP receives a multicast stream comprising a sequence of multicast data packets. Where the wireless device 104 is a STB, the multicast stream is a video channel such as BT Sport 1.

However, as identified earlier and shown in Table 1, in some circumstances each received multicast packet might be transmitted as a single unicast packet over Wi-Fi, which results in quite an inefficient use of the air interface. In examples of the invention, the aim is to better utilise Wi-Fi frame aggregation, and send multiple data packets as an aggregated packet, e.g. an A-MPDU, to reduce the overhead of the RTS/CTS/BlkAck to data ratio. An example of an improvement with 5 packets worth of received data being sent as a single A-MPDU packet is shown in Table 2 below.

| ***Pkt* #** | ***Type*** | ***Direction*** |
|---|---|---|
| 1. | RTS | AP → STB |
| 2. | CTS | AP ← STB |
| 3. | A-MPDU | AP → STB |
| | Data (1) | |
| | Data (2) | |
| | Data (3) | |
| | Data (4) | |
| | Data (5) | |
| 4. | BlkAck | AP ← STB |

This approach would introduce more latency but in many circumstances the increase would be acceptable. For example, in video delivery the latency might increase from 1.2ms to 6ms, which would be unnoticeable for video consumption.

The following example of the invention will now be described with reference to a single multicast stream of data packets received periodically by the AP 102. The stream may be a TV channel such as BT Sport 1, which the wireless device 104 is configured to receive at the WAN interface 202. In other words, all the data packets being received by the AP 102 in this example are assumed to be of the same stream (or channel), and will be processed and transmitted over Wi-Fi to the wireless device 104.

However, examples of the invention can be applied to each of a plurality of multicast streams received by the AP 102, where the data packets of each multicast stream can be processed and transmitted onto different wireless devices for consumption.

A person skilled in the art will realise that each stream (be it from a single or multiple streams) can be processed into a respective queue (e.g. one for each destination and channel combination) using the Linux kernel NFQUEUE and suitable configured filters. Each queue can be processed according to the methods now described.

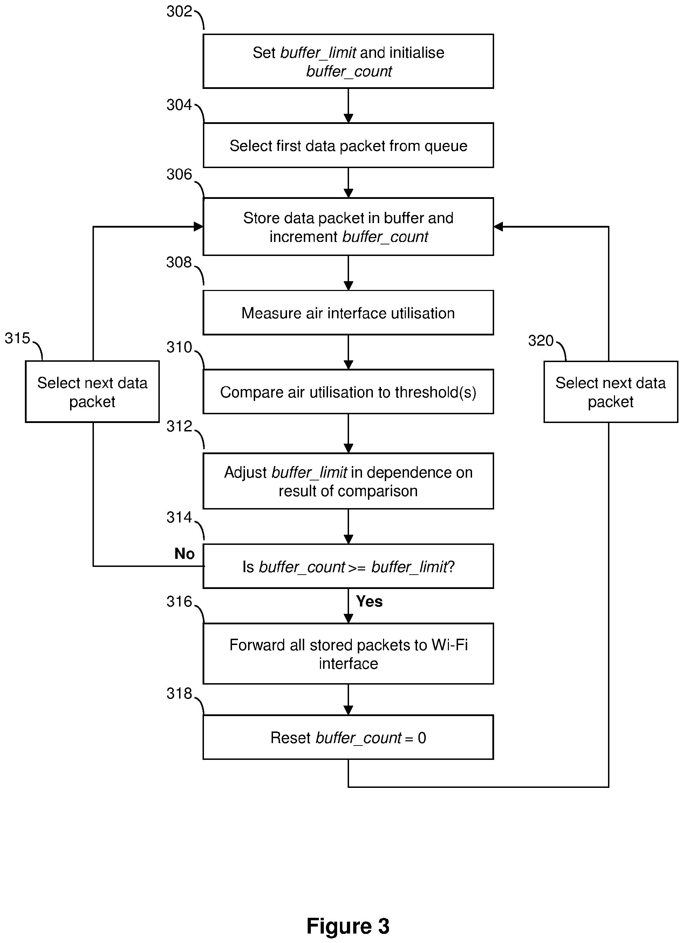

An example method of operating the AP 102 under control of the controller 206 to perform improved frame aggregation is now described with reference to the flow chart of Figure 3.

Processing starts at step 302, where some initial parameters are set. The parameter *buffer_limit* is set to an initial value e.g. 3. The *buffer_limit* is a numerical value for the maximum number of data packets that should be stored in the buffer 204. A parameter buffer_count is initialised to zero, and will be used to keep a track of the number of data packets stored in the buffer 204.

As already described above, it is assumed that the AP 102 has already started receiving a sequence of data packets, and continuously builds a queue of those data packets. Thus, in step 304, the first data packet (from the received sequence) from the queue is selected.

In step 306, the selected data packet is stored in the buffer 204 and the parameter *buffer_count* is incremented to indicate a data packet has been added to the buffer 204.

In step 308, the current air interface utilisation is measured. Measuring air interface utilisation can be carried out using most Wi-Fi driver implementations using a query function, and typically returns a percentage value. Measurement can be instructed by the controller 206 and performed by the Wi-Fi interface 208, and will be performed on the specific band (2.4GHz or 5GHz) that the wireless device is connected to the AP 102 on. Note that whilst this step has been shown to be performed every time a packet is processed, it may be more efficient to measure the air interface utilisation less often, say every few seconds instead.

In step 310, the measure air interface utilisation is compared to a maximum air utilisation threshold *utilisationₘₐₓᵢₘᵤₘ* and a minumum air utilisation threshold *utilisationₘᵢₙᵢₘᵤₘ.* For example, these thresholds can be set to 20% and 12%, respectively, but these can be set to other values or be changed following a calibration process.

In step 312, if the measured air utilisation is above *utilisationₘₐₓᵢₘᵤₘ*, *buffer_limit* can be incremented by one and the new buffer size allocated to the buffer 204. This increase in the buffer size will eventually result in the air utilisation lowering once more packets are being aggregated and sent over Wi-Fi. However, the buffer_limit cannot be incremented indefinitely as after a certain point the air utilisation will reach a lower limit. Therefore, an upper limit on *buffer_limit* can be set accordingly.

If the measured air utilisation is between *utilisationₘₐₓᵢₘᵤₘ* and *utilisationₘᵢₙᵢₘᵤₘ,* then *buffer_limit* is left unchanged. This will result in the air utilisation being kept constant.

If the measured air utilisation is below *utilisationₘᵢₙᵢₘᵤₘ, buffer_limit* can be decremented by one and any unused buffer deallocated. This reduction in the buffer size will eventually result in the air utilisation increasing as fewer packets are aggregated before being sent over Wi-Fi. Note, a lower limit on *buffer_limit* could be set, for example to 1.

The effects of this feedback loop means that when little traffic is being processed the method settles on using the minimum number of buffers, which advantageously uses less memory and introduces minimum latency at the acceptable cost of increased air utilisation. Conversely, when a lot of traffic is being processed the method settles on using the maximum number of buffers, which uses more memory and introduces more latency, but reduces the overall air utilisation.

In step 314, a check is made to determine if *buffer_count* >= *buffer_limit,* in other words, is the buffer full based on the limits we have set?

If the answer is 'No' to step 314, then processing passes to step 315 to process the next packet in the queue by selecting the next data packet in the queue. Then processing repeats from step 306 onwards to process the next data packet as above.

If the answer is `yes' to step 314, then processing passes to step 316.

In step 316, all the packets stored in the buffer are forwarded to the Wi-Fi interface for transmission over Wi-Fi to the wireless device 104. The forwarding is done with a minimal interval between the data packets. As such, the total interval between the data packets should always be less than the Wi-Fi frame aggregation threshold used by the Wi-Fi interface 208, below which Wi-Fi frame aggregation will be performed. Therefore, the data packets forwarded from the buffer 204 to the Wi-Fi interface 208 in this manner will be aggregated by the Wi-Fi interface 208 into a single data packet before being transmitted over Wi-Fi to the wireless device 104.

In step 318, the *buffer_count* parameter is reset to zero, and then in step 320, the next data packet is selected from the queue, which is processed starting from step 306.

Whilst not shown in Figure 3, if at any stage in steps 315 or 320 there are no data packets ready for processing (e.g. when all the data packets in the queue have been processed), then the process waits for a predefined timeout until either there is a data packet to process or the timeout is exceeded. On a timeout processing passes directly to step 316 to forward the data packets that have been buffered to the Wi-Fi interface and then finish processing.

The operation of the Wi-Fi interface 208 and how it performs frame aggregation is now briefly described. Wi-Fi drivers in the Wi-Fi interfaces use a frame aggregation threshold or timeout (which is driver specific). The Wi-Fi driver collects data packets received by the Wi-Fi interface at its input buffer, starting a timer when the first packet is received in the buffer. As the time increases, further packets may be received at the input buffer.

When the timer reaches the frame aggregation threshold, the Wi-Fi driver aggregates all the data packets received at the input buffer into one A-MPDU frame for transmission over the air interface. Therefore, as long as the controller 206 can forward all data packets from the buffer 204 to the Wi-Fi interface 208 within the Wi-Fi driver's frame aggregation threshold, then Wi-Fi aggregation will take place.

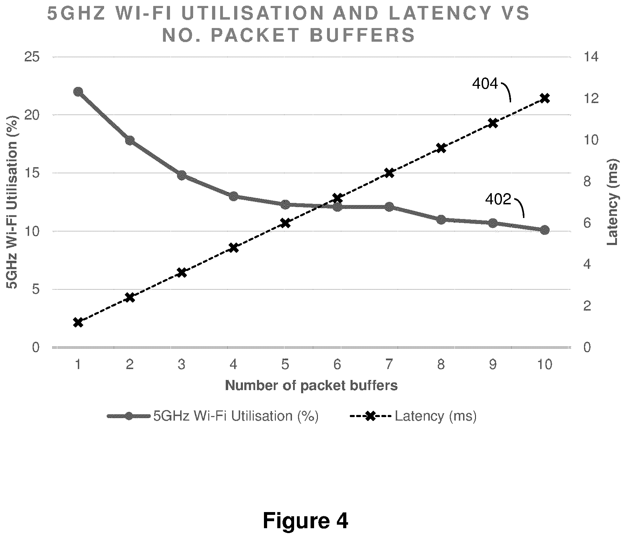

Figure 4 shows the results of tests of a streamed multicast sports channel to the STB 104 connected to the AP 102 over the 5GHz band, and how frame aggregation can improve the (5GHz) Wi-Fi air utilisation. The solid plot 402 represents the 5GHz Wi-Fi air utilisation, and the dashed plot 404 represents the latency, both of which are plotted against the number of packet buffers (i.e. the number of data packets held before being forwarded to the Wi-Fi interface). As the number of buffers increases, the 5GHz Wi-Fi air utilisation decreases and the packet latency increases. A value of 5 packet buffers in this example gives a good air utilisation vs packet latency. Lower levels of air utilisation can be achieved using more buffers, however Wi-Fi Frame Aggregation does have a maximum number of packets it will aggregate (which is dependent on the Wi-Fi driver but is typically around 64), so having more buffers will not always improve the air utilisation when this limit is reached.

Examples of the invention are realised, at least in part, by executable computer program code which may be embodied in an application program data. When such computer program code is loaded into the memory of the processor in the controller 206, it provides a computer program code structure which is capable of performing at least part of the methods in accordance with the above-described examples.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of operating a wireless access point, the wireless access point comprising a network interface, a buffer and a wireless interface, the method comprising the steps of:
receiving a stream of data packets on the network interface, wherein an interarrival time between the data packets is greater than a frame aggregation threshold;
storing each of the data packets in the buffer; and
forwarding the buffered data packets to the wireless interface, wherein the total time interval over which the data packet have been forwarded is less than the frame aggregation threshold such that the forwarded data packets are transmitted over a wireless local area network by the wireless interface in a single aggregated frame.

2. A method as claimed in claim 1, further comprising the steps of:
obtaining a measurement indicating an air utilisation of the wireless local area network;
setting a buffer limit based on the air utilisation; and
forwarding the buffered data packets when a count of the buffered data packets reaches the buffer limit.

3. A method as claimed in claim 2, wherein, if the air utilisation of the wireless local area network is greater than a first threshold, the buffer limit is increased; and if the air utilisation of the wireless local area network is less than a second threshold, the buffer limit is decreased.

4. A method as claimed in any one of the preceding claims, wherein the forwarded data packets are transmitted over the wireless local area network as a unicast stream.

5. A method as claimed in any one of the preceding claims, wherein the stream of data packets is received as a multicast stream.

6. A method as claimed in any one of the preceding claims, wherein the data packets correspond to video data.

7. A method as claimed in any one of the preceding claims, wherein the forwarded data packets are transmitted to a wireless device connected to the access point over the wireless local area network.

8. A wireless access point comprising a network interface, a buffer, a controller and a wireless interface, wherein:
the network interface is adapted to receive data packets, wherein an interarrival time between the data packets is greater than a frame aggregation threshold;
the buffer is adapted to store each of the data packets; and
the controller is adapted to forward the buffered data packets to the wireless interface, wherein the total time interval over which the data packet have been forwarded is less than the frame aggregation threshold such that the forwarded data packets are transmitted over a wireless local area network by the wireless interface in an aggregated frame.
